Europäisches Patentamt

European Patent Office

Office européen des brevets

(11) Veröffentlichungsnummer: **0 144 929**
A2

(12) # EUROPÄISCHE PATENTANMELDUNG

(21) Anmeldenummer: 84114539.4

(51) Int. Cl.⁴: **G 01 N 21/85**

(22) Anmeldetag: 30.11.84

(30) Priorität: 08.12.83 DE 3344388

(43) Veröffentlichungstag der Anmeldung:
19.06.85 Patentblatt 85/25

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Gross, Jürgen, Dr.
Frankfurter Strasse 4
D-6238 Hofheim am Taunus(DE)

(72) Erfinder: Dinges, Reinhard, Dr.
Martin-Luther-Weg 3
D-6232 Bad Soden am Taunus(DE)

(54) Photometerkopf.

(57) Bei diesem Photometerkopf zum Eintauchen in flüssige Medien ist mindestens ein Lichtsender (2) und ein Lichtempfänger (3) in einer Halterung (1) angeordnet, die Stützen (6) für einen Spiegelhalter (7) aufweist. Der Spiegelhalter trägt mindestens zwei Spiegel (8), die gegeneinander geneigt und mit Abstand gegenüber dem zugehörigen Lichtsender bzw. Lichtempfänger angeordnet sind. Durch die Stützen, der Spiegelhalter und die Halterung wird im offenen Raum (5) begrenzt, in den ein Kanal (4) mündet und der Spiegelhalter mit einer Öffnung (9) versehen ist, die dem Kanal (4) gegenüberliegt.

FIG.1

EP 0 144 929 A2

Photometerkopf

Gegenstand der Erfindung ist ein Photometerkopf zum Eintauchen in flüssige Medien, der einen Lichtsender und einen Lichtempfänger aufweist, deren in einer Ebene befindlichen Flächen für den Austritt bzw. Eintritt der Lichtenergie aus dem Lichtsender bzw. in den Lichtempfänger gegenüber einem Spiegel angeordnet sind.

Photometerköpfe der genannten Art sind aus der französischen Patentanmeldung Nr. 2 297 415 bekannt.

Aufgabe zu vorliegender Erfindung besteht darin einen Photometerkopf zu schaffen, mit dem bei langem Lichtweg im Meßraum die Meßvolumina kleingehalten werden können.

Die Aufgabe wird durch einen Photometerkopf gelöst, der dadurch gekennzeichnet ist, daß mindestens ein Lichtsender und ein Lichtempfänger (ein Paar) in einer Halterung angeordnet sind, die Stützen für einen Spiegelhalter aufweist, der mindestens 2 Spiegel trägt, die gegeneinander geneigt und mit Abstand gegenüber dem zugehörigen Lichtsender bzw. Lichtempfänger angeordnet sind, daß durch die Stützen, den Spiegelhalter und die Halterung ein offener Raum begrenzt wird, in den ein Kanal mündet, der sich in der Halterung zwischen Lichtsender und Lichtempfänger befindet und der Spiegelhalter mit einer Öffnung versehen ist, die dem Kanal gegenüberliegt.

In einer Ausgestaltung sind in der Halterung parallell zum Kanal mindestens 2 Paare aus Lichtsender und Lichtempfänger angeordnet und auf dem Spiegelhalter um die Öffnung herum mindestens 2 Paare von jeweils 2 Spiegeln, die gegeneinander geneigt sind, so daß sie einen Winkel-α von 90° einschließen. Die Lichtsender und Lichtempfänger können mit selbstfokussierenden optischen Einrichtungen versehen sein.

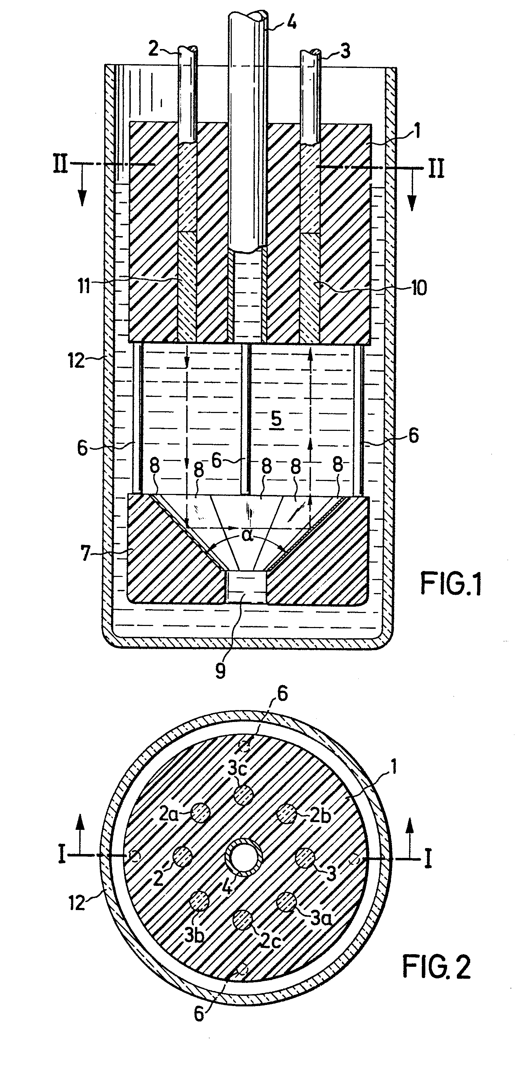

Im folgenden wird die Erfindung anhand von lediglich einen Ausführungsweg darstellenden Zeichnungen näher erläutert. Es zeigt Figur 1, den Photometerkopf, und zwar als Schnitt I-I der Figur 2 und Figur 2 den Schnitt II-II von Figur 1.

Bei dem Photometerkopf zum Eintauchen in flüssige Medien sind in einer Halterung 1 aus Kunststoff, Kunstharz, Metall usw. die Paare aus jeweils einem Lichtsender 2 und einem Lichtempfänger 3 angeordnet. Die Halterung 1 weist Stützen 6 für einen Spiegelhalter 7 auf, der Spiegel 8 trägt, die sich genau gegenüber den zugehörigen Lichtsendern 2 bzw. Lichtempfänger 3 befinden und so gegeneinander geneigt sind, daß sie einen Winkel-α von 90° einschließen. Lichtsender 2 und Lichtempfänger 3 sind zweckmäßig achsensymmetrisch zueinander und konzentrisch um einen Kanal 4 angeordnet. Dieser Kanal 4 mündet in einen offenen Raum 5, der durch die Halterung 1, die Stützen 6 und den Spiegelhalter 7 begrenzt wird. Der Spiegelhalter 7 ist mit einer Öffnung 9 versehen, die dem Kanal 4 gegenüberliegt und um die die Spiegel 8 ebenfalls achsensymmetrisch angeordnet sind. Als Lichtsender 2 eignen sich Lichtquellen wie Lampen, Leuchtdioden oder Glasfaserlichtleiter und als Lichtempfänger 3 Fotodioden oder ebenfalls Glasfaserlichtleiter. Die Figur 1 zeigt Lichtleiter 2,3 deren Enden mit selbstfokussierenden optischen Einrichtungen 10,11 versehen sind. 12 deutet ein Gefäß mit einem flüssigen Medium an, in das der Photometerkopf eingetaucht ist. Die Buchstaben a bis c sollen andeuten, welche Lichtsender 2 und Lichtempfänger 3 jeweils ein Paar bilden.

Die Lichtsender (2) senden Lichtbündel in den offenen Raum (5). Nach Durchgang durch das flüssige Medium gelangen die Lichtbündel über die Spiegel 8 zu den Lichtempfängern 3, wodurch sich ein besonders langer Lichtweg ergibt. Neben weißem Licht kann auch verschiedenfarbiges Licht über korrespondierende Lichtleiterpaare 2a, 3a, 2b, 3b ..... geführt werden, so daß zeitlich parallell bichromatische oder auch polychromatische Photometermessungen durchgeführt werden können. Fluoreszenz - oder Chemolumineszenzmessungen - können ebenfalls durchgeführt werden. Bei langem Lichtweg im offenen Meßraum 5 kann das Volumen des flüssigen Mediums kleingehalten werden. Über Kanal 4 kann flüssiges Medium zugeführt werden bzw. durch Absaugen dafür Sorge getragen werden, daß der offene Raum 5 vollständig mit flüssigem Medium gefüllt wird. Der Photometerkopf bietet darüber hinaus noch den Vorteil der einfachen Reinigung.

Patentansprüche:

1. Photometerkopf zum Eintauchen in flüssige Medien, der einen Lichtsender und einen Lichtempfänger aufweist, deren in einer Ebene befindlichen Flächen für den Austritt bzw. den Eintritt der Lichtenergie aus dem Lichtsender bzw. in den Lichtempfänger gegenüber einem Spiegel angeordnet sind, dadurch gekennzeichnet, daß mindestens ein Lichtsender (2) und ein Lichtempfänger (3) (Paar) in einer Halterung (1) angeordnet sind, die Stützen (6) für einen Spiegelhalter (7) aufweist, der mindestens zwei Spiegel (8) trägt, die gegeneinander geneigt und mit Abstand gegenüber dem zugehörigen Lichtsender bzw. Lichtempfänger angeordnet sind und daß durch die Stützen (6), den Spiegelhalter (7) und die Halterung (1) ein offener Raum (5) begrenzt wird, in den ein Kanal (4) mündet, der sich in der Halterung (1) zwischen Lichtsender (2) und Lichtempfänger (3) befindet und der Spiegelhalter (7) mit einer Öffnung (9) versehen ist, die dem Kanal (4) gegenüberliegt.

2. Photometerkopf nach Anspruch 1, dadurch gekennzeichnet, daß in der Halterung (1) parallel zum Kanal mindestens 2 Paare aus Lichtsender (2) und Lichtempfänger (3) angeordnet sind und auf den Spiegelhalter (1) um die Öffnung (9) herum mindestens 2 Paare von jeweils 2 Spiegeln (8) angeordnet sind, die gegeneinander geneigt sind, so daß sie einen Winkel-α von 90° einschließen.

3. Photometerkopf nach Anspruch 1 oder 2, dadurch gekennzeichnet, daß die Lichtsender (2) und die Lichtempfänger (3) mit selbstfokussierenden optischen Einrichtungen (10,11) versehen sind.

0144929

FIG.1

FIG.2